# EUROPEAN PATENT APPLICATION

(11) **EP 3 584 186 A2**
(43) Date of publication of application: **25.12.2019**
(21) Application number: 19181506.7
(22) Date of filing: 20.06.2019
(51) Int. Cl.: B65D 5/64, B65D 5/30, B65D 5/32, B65D 5/50

(54) **PACKING CONTAINER AND SHEET MATERIAL FOR PACKING CONTAINER**

(30) Priority: 20.06.2018 JP 2018117177
(71) Applicant: MITSUBISHI HEAVY INDUSTRIES THERMAL SYSTEMS, LTD., 108-8215 Tokyo (JP)
(72) Inventor: FUJII, Hiroyuki, TOKYO, 108-8215 (JP); ITO, Masakazu, TOKYO, 108-8215 (JP)
(74) Representative: Cabinet Beau de Loménie

(57) **Abstract**

The aim is to reliably fix an item to be packed while reducing the number of parts and materials to be used. A packing container includes a first flap (8) connected to a first side surface portion, and a second flap (9) connected to a second side surface portion and adjacent to the first flap (8), wherein the first flap (8) has a first upper surface portion (12) provided on a fold portion (24) side and a first lower surface portion (13) connected to the first upper surface portion (12) through a fold portion (26), and the second flap (9) has a protruding portion (28) formed at an end portion of the second flap (9) so that, in a state in which the second flap (9) is folded inward, the protruding portion (28) protrudes more inward than a middle portion of the second flap (9) and is sandwiched between the first upper surface portion (12) and the first lower surface portion (13) of the first flap (8).

## Description

### [Technical Field]

The present invention relates to a packing container and a sheet material for a packing container.

### [Background Art]

Conventionally, in the case of using a packing container to pack a panel material such as a decorative panel of a ceiling-embedded air conditioner, the panel material that is an item to be packed is generally packed by a combination of a tray-like lower box and an upper lid placed on the lower box.

In PTL 1 below, it is disclosed that reinforcing pieces is placed in the corners of a lower packing material formed by folding a corrugated cardboard sheet, thereby making a robust configuration capable of preventing breakage of the packing material and protecting a packed item even when the packed item is dropped.

### [Citation List]

### [Patent Literature]

[PTL 1] The Publication of Japanese Patent No. 5077387

### [Summary of Invention]

### [Technical Problem]

In the case where an item to be packed is packed by a combination of a tray-like lower box and an upper lid that is placed over the lower box, in general, the lower box and the upper lid are fixed using a kraft adhesive tape, a polypropylene (PP) band, or the like.

In the case of the above-described fixing method, since another material different from the sheet material such as cardboard is used, there is a disadvantage that the number of steps in the packing process is increased, and sorting may possibly be required when the packing container is discarded, and more work and time are required in such a case.

The present invention has been made in view of such a situation and aims to provide a packing container and a sheet material for a packing container, capable of reliably fixing an item to be packed while reducing the number of parts and materials to be used.

### [Solution to Problem]

A packing container according to the first aspect of the present invention comprises: a bottom surface portion; a first side surface portion connected to the bottom surface portion through a first fold portion; a second side surface portion connected to the bottom surface portion through a second fold portion and adjacent to the first side surface portion; a first flap connected to the first side surface portion through a third fold portion; and a second flap connected to the second side surface portion through a fourth fold portion and adjacent to the first flap, wherein the first flap has a first upper surface portion provided on the third fold portion side, and a first lower surface portion connected to the upper surface portion through a fifth fold portion, and the second flap has a protruding portion formed at an end portion of the second flap so that, in a state in which the second flap is folded inward, the protruding portion protrudes more inward than a middle portion of the second flap and is sandwiched between the first upper surface portion and the first lower surface portion of the first flap.

According to this configuration, the first side surface portion is connected to the bottom surface portion through the first fold portion, the second side surface portion is connected to the bottom surface portion through the second fold portion, and the first side surface portion and the second side surface portion are adjacent to each other in the state of being upright with respect to the bottom surface portion. Moreover, the first flap is connected to the first side surface portion through the third fold portion, the second flap is connected to the second side surface portion through the fourth fold portion, and the first flap and the second flap are adjacent to each other in the state of being folded inward.

Further, the first flap has the first upper surface portion provided on the third fold portion side and the first lower surface portion connected to the first upper surface portion through the fifth fold portion, and, in a state in which the first upper surface portion of the first flap is folded inward and the first lower surface portion is further folded, the first upper surface portion is placed on the upper side and the first lower surface portion is placed on the lower side. At an end portion of the second flap, the protruding portion is formed to protrude more inward than the middle portion in the state in which the second flap is folded inward, and the protruding portion is placed to be sandwiched between the first upper surface portion and the first lower surface portion of the first flap.

The first lower surface portion of the first flap is pushed upward from the lower side by an item to be packed which is stored in the packing container, and the first flap is kept in the state of not being opened. Consequently, the closed state of the first flap is maintained, and the first flap is hard to open. Furthermore, since the first lower surface portion of the first flap is inserted from the inside to the outside of the protruding portion of the second flap, the closed state of the second flap is maintained, and the second flap is hard to open.

When unpacking, the locked state of the first flap and the second flap is easily released by lifting up the first flap sandwiching the protruding portion of the second flap. The motion of lifting up the first flap does not happen in a stored state in which the item to be packed is packed and stored, and therefore the packing container is unlikely to be accidentally opened in the stored state.

In the above aspect, the second flap may have a second upper surface portion provided on the fourth fold portion side and a second lower surface portion connected to the second upper surface portion through a sixth fold portion, and the protruding portion may be formed at an end portion of the second lower surface portion so that, in a state in which the second upper surface portion is folded inward and the second lower surface portion is further folded, the protruding portion protrudes more inward than middle portions of the second upper surface portion and the second lower surface portion.

According to this configuration, the second flap has the second upper surface portion provided on the fourth fold portion side and the second lower surface portion connected to the second upper surface portion through the sixth fold portion, and, in the state in which the second upper surface portion of the second flap is folded inward and the second lower surface portion further folded, the second upper surface portion is placed on the upper side and the second lower surface portion is placed on the lower side. At an end portion of the second lower surface portion of the second flap, the protruding portion is formed to protrude more inward than the middle portions of the second upper surface portion and the second lower surface portion in the state in which the second upper surface portion is folded inward and the second lower surface portion is further folded. The protruding portion is formed on the second lower surface side, and therefore, when the protruding portion is placed to be sandwiched between the first upper surface portion and the first lower surface portion of the first flap, the first upper surface portion of the first flap and the second upper surface portion of the second flap are positioned at substantially the same height. Hence, when the item to be packed is packed, there is no difference in level between the first flap and the second flap on the upper surface of the packing container.

In the above aspect, the packing container may further comprise: a main body part formed of a sheet material, including the bottom surface portion, the first side surface portion, the second side surface portion, the first flap and the second flap; and a lid part formed of a sheet material different from the sheet material forming the main body part and placed parallel to the bottom surface portion, wherein the main body part has an insertion portion connected to the first lower surface portion of the first flap and formed to protrude inward in a state in which the first upper surface portion is folded inward and the first lower surface portion is further folded, and the insertion portion is inserted into an insertion hole formed in the lid part.

According to this configuration, the main body part formed of a sheet material is composed of the bottom surface portion, the first side surface portion, the second side surface portion, the first flap and the second flap, and the lid part is further provided separately from the main body part. The lid part is a sheet material and placed parallel to the bottom surface portion. The insertion portion connected to the first lower surface portion of the first flap is formed to protrude inward in the state in which the first upper surface portion is folded inward and the first lower surface portion is further folded. The insertion portion is inserted into the insertion hole formed in the lid part. In this state, the first flap is fixed to the lid part, and the second flap is also in a state of being locked by the first flap.

In the above aspect, a side end portion of the first upper surface portion may be formed in a direction inclined with respect to the first side surface portion and a side end portion of the second upper surface portion may be formed in a direction inclined with respect to the second side surface portion so that the side end portion of the first upper surface portion of the first flap and the side end portion of the second upper surface portion of the second flap abut each other.

According to this configuration, the side end portion of the first upper surface portion of the first flap is formed in a direction inclined with respect to the first side surface portion, and the side end portion of the second upper surface portion of the second flap is formed in a direction inclined with respect to the second side surface portion, so that the side end portion of the first upper surface portion and the side end portion of the second upper surface portion are formed to be able to abut each other. Since the side end portion of the first upper surface portion and the side end portion of the second upper surface portion abut each other, a corner of the packing container is formed by the first side surface portion, the second side surface portion, the first flap and the second flap.

A sheet material for a packing container according to the second aspect of the present invention is for forming a packing container, and includes: a bottom surface portion; a first side surface portion connected to the bottom surface portion through a first fold portion; a second side surface portion connected to the bottom surface portion through a second fold portion and adjacent to the first side surface portion; a first flap connected to the first side surface portion through a third fold portion; and a second flap connected to the second side surface portion through a fourth fold portion and adjacent to the first flap, wherein the first flap has a first upper surface portion provided on the third fold portion side and a first lower surface portion connected to the first upper surface portion through a fifth fold portion, and the second flap has a protruding portion formed at an end portion of the second flap so that, in a state in which the second flap is folded inward, the protruding portion protrudes more inward than a middle portion of the second flap and is sandwiched between the first upper surface portion and the first lower surface portion of the first flap.

### [Advantageous Effects of Invention]

According to the present invention, it is possible to reliably fix an item to be packed while reducing the number of parts and materials to be used.

### [Brief Description of Drawings]

FIG. 1 is a plan view showing a sheet material for forming the main body part of a packing container according to one embodiment of the present invention.
FIG. 2 is a partially enlarged plan view showing the sheet material for forming the main body part of the packing container according to one embodiment of the present invention.
FIG. 3 is an exploded perspective view showing the packing container according to one embodiment of the present invention.
FIG. 4 is a perspective view showing the packing container according to one embodiment of the present invention.
FIG. 5 is a plan view showing the packing container according to one embodiment of the present invention, and showing a state in which the second flap is folded inward.
FIG. 6 is a plan view showing the packing container according to one embodiment of the present invention, and showing a state in which the second lower surface portion of the second flap is further folded after the state of FIG. 5.
FIG. 7 is a plan view showing the packing container according to one embodiment of the present invention, and showing a state in which the first flap is folded inward after the state of FIG. 6.
FIG. 8 is a plan view showing the packing container according to one embodiment of the present invention, and showing a state in which the first lower surface portion of the first flap is further folded after the state of FIG. 7.
FIG. 9 is a side view showing the packing container according to one embodiment of the present invention.
FIG. 10 is a longitudinal sectional view showing the main body part of the packing container according to one embodiment of the present invention, seen in the arrow direction from the X-X line of FIG. 3.
FIG. 11 is a cross-sectional view showing the main body part of the packing container according to one embodiment of the present invention, seen in the arrow direction from the XI-XI line of FIG. 10.
FIG. 12 is a partially enlarged perspective view showing the main body part of the packing container according to one embodiment of the present invention, and showing a state before a strip portion is inserted into an opening portion.
FIG. 13 is a partially enlarged perspective view showing the main body part of the packing container according to one embodiment of the present invention, and showing a state in which the strip portion is inserted into the opening portion.

### [Description of Embodiment]

Hereinafter, a packing container 1 according to one embodiment of the present invention will be described with reference to the drawings.

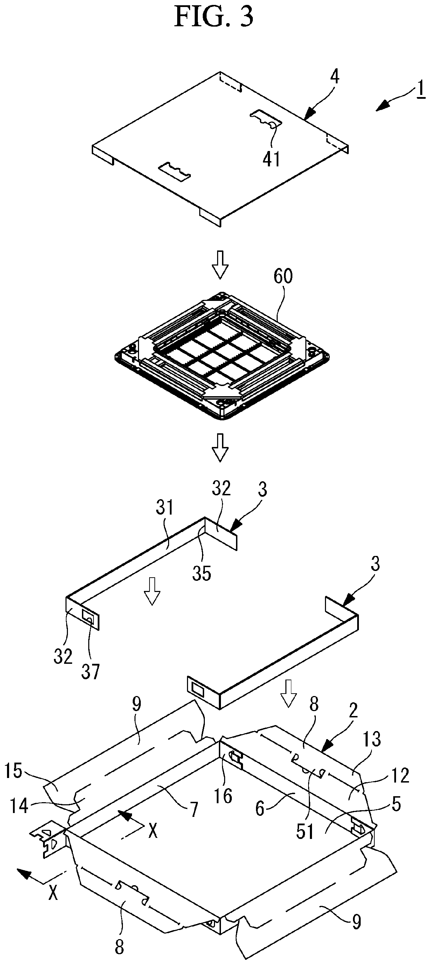

The packing container 1 according to the present embodiment is formed of a sheet material (plate material), and is for storing a panel member 60 such as a decorative panel of a ceiling-embedded air conditioner as shown, for example, in FIG. 3. The panel member 60 is, for example, quadrangular in shape in a plan view, and has a shape with a lower height relative to the width and depth of a plate surface of the panel member 60.

Here, the sheet material is also called a blank, and is a flat cardboard made of paper. The sheet material is folded along fold lines and assembled into the box-like packing container 1. The sheet material is not limited to cardboard made of paper, and may be plastic cardboard or thick paper other than cardboard as long as suitable for packing.

As shown in FIG. 3, the packing container 1 includes: a main body part 2 including a bottom surface portion 5, first side surface portions 6, and second side surface portions 7; spacers 3 placed along the inner surfaces of the first side surface portions 6 and the second side surface portions 7 of the main body part 2; and a lid part 4 that covers the main body part 2. When the panel member 60 is stored in the main body part 2, the lid part 4 covers the stored panel member 60.

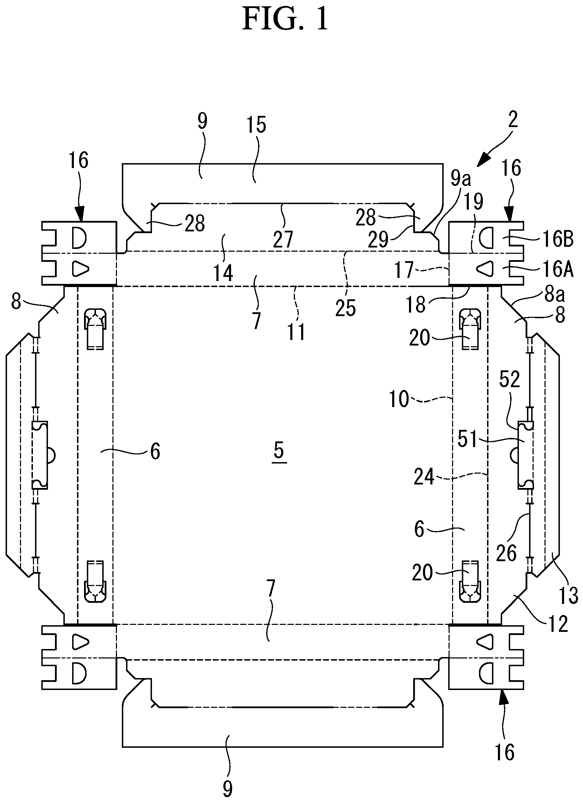

As shown in FIG. 1, the main body part 2 is a container which is formed by assembling one blank sheet and has a shape of a relatively shallow tray when assembled, and further has first flaps 8 and second flaps 9 that can further cover four sides of the lid part 4 from the upper surface of the lid part 4 .

The bottom surface portion 5 of the main body part 2 has a shape conforming to the planar shape of the panel member 60 to be stored, and, for example, when the panel member 60 has a square shape, the bottom surface portion 5 also has a square shape. When the bottom surface portion 5 has a quadrangular shape, the first side surface portions 6 are provided on a pair of two sides facing each other among the four sides of the bottom surface portion 5. Moreover, the second side surface portions 7 are provided on another pair of two sides facing each other among the four sides of the bottom surface portion 5.

The first side surface portion 6 is provided continuously to the bottom surface portion 5 through a first fold line 10. The first fold line 10 is one example of a first fold portion. The first side surface portion 6 is placed vertically to the bottom surface portion 5 when assembled. The first side surface portion 6 has a substantially rectangular shape, and the longitudinal direction is parallel to one side of the bottom surface portion 5 located adjacent to the first side surface portion 6. The longitudinal direction of the first side surface portion 6 has a length equal to one side of the bottom surface portion 5 located adjacent to the first side surface portion 6.

The second side surface portion 7 is provided continuously to the bottom surface portion 5 through a second fold line 11. The second fold line 11 is one example of a second fold portion. The second side surface portion 7 is placed vertically to the bottom surface portion 5 when assembled. The second side surface portion 7 has a substantially rectangular shape, and the longitudinal direction is parallel to one side of the bottom surface portion 5 provided continuously to the second side surface portion 7. The longitudinal direction of the second side surface portion 7 has a length equal to one side of the bottom surface portion 5 provided continuously to the second side surface portion 7.

A connection portion 16 has, for example, a rectangular shape, and is connected to the second side surface portion 7 through a fold line 17. The first side surface portion 6 or the first flap 8 and the connection portion 16 are separated by a cut 18 formed on an extended line of the second fold line 11. The connection portion 16 is placed along the inner surface of the first side surface portion 6 which is in an upright state with respect to the bottom surface portion 5.

The connection portion 16 has an inside plate 16A and an outside plate 16B. The inside plate 16A and the outside plate 16B are connected to each other through a fold line 19. The inside plate 16A is connected to the second side surface portion 7 through the fold line 17. Hence, when the connection portion 16 is placed along the inner surface of the first side surface portion 6, the inside plate 16A is located on the inside, and the outside plate 16B which is folded outward on the fold line 19 is located on the outside. As a result, the connection portion 16 has a double-plate structure with a stack of the inside plate 16A and the outside plate 16B.

According to this configuration, the connection portion 16 is connected to second side surface portion 7 through the fold line 17, the connection portion 16 is foldable with respect to the second side surface portion 7 on the fold line 17, and the second side surface portion 7 and the connection portion 16 have an L shape. By placing the connection portion 16 along the inner surface of the first side surface portion 6 in a state in which the second side surface portion 7 stands on the bottom surface portion 5, it is possible to support a load in the height direction of the main body part 2, thereby improving the strength of the packing container 1.

In the above-described embodiment, the case where the connection portion 16 has a double-plate structure with the inside plate 16A and the outside plate 16B is described, but the present embodiment is not limited to this example, and it is possible to have a single plate structure without a folded-back part, or a structure with a stack of three or more plates.

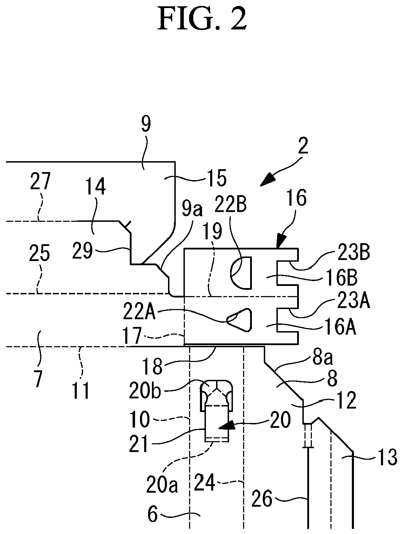

In the first side surface portion 6, a strip portion 20 having a long strip shape in one direction is formed. As shown in FIG. 2, in the strip portion 20, a base end 20a is connected to a plate surface of the first side surface portion 6, and a tip 20b side can be separated from the first side surface portion 6. The strip portion 20 extends parallel to the longitudinal direction of the first side surface portion 6.

Formed on the inside of the plate surface of the first side surface portion 6 is a cut 21 through which the strip portion 20 except the base end 20a is pulled. With the cut 21, the strip portion 20 is formed so that the base end 20a is connected to the first side surface portion 6 and the tip 20b side is in a cantilevered state with respect to the first side surface portion 6.

As shown in FIG. 2, opening portions 22A and 22B, which allow insertion of the tip 20b of the strip portion 20, are formed in the plate surfaces of the inside plate 16A and the outside plate 16B, respectively, of the connection portion 16. The two opening portions 22A and 22B of the inside plate 16A and the outside plate 16B are formed to coincide with each other in a state in which the inside plate 16A and the outside plate 16B are stacked. The first side surface portion 6 and the connection portion 16 are fixed by engagement of the strip portion 20 and the opening portions 22A, 22B.

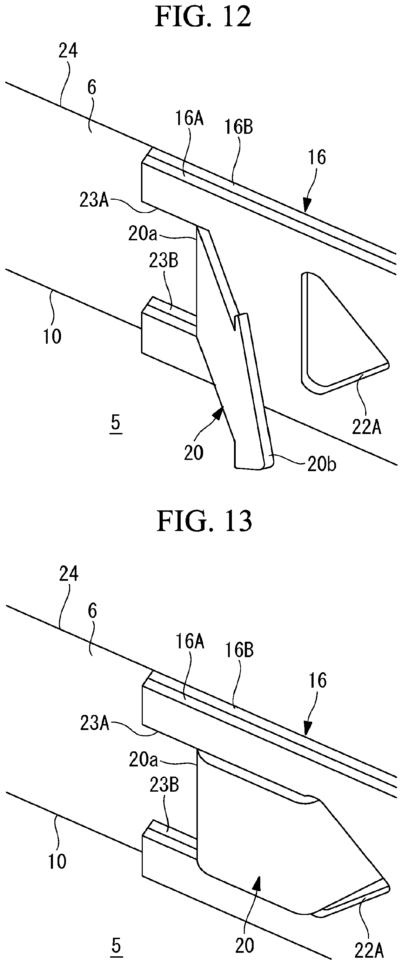

Cutout portions 23A and 23B, each having a recessed shape in the central portion in the height direction, are formed in an end portion of each of the inside plate 16A and the outside plate 16B of the connection portion 16. As shown in FIG. 12, the base end 20a side of the strip portion 20 can be engaged with the cutout portions 23A, 23B. Thus, since the base end 20a side of the strip portion 20 is engaged with the cutout portions 23A, 23B, positional misalignment between the strip portion 20 and the connection portion 16 is less likely to occur, and the first side surface portion 6 and the connection portion 16 are more firmly fixed to each other.

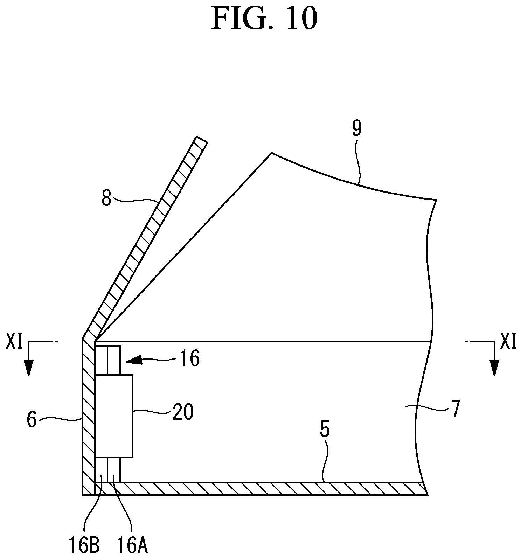

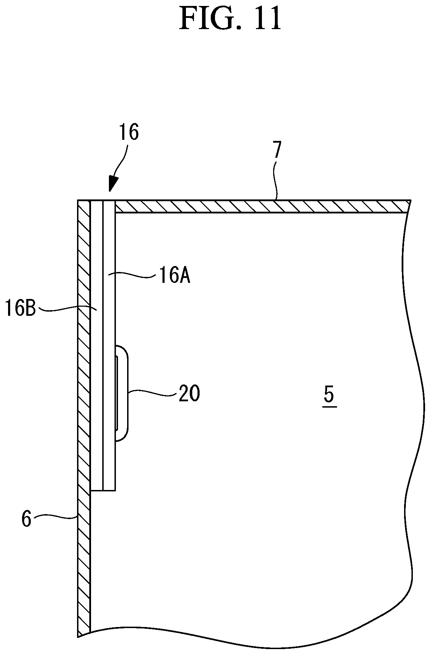

When a corner of the packing container 1 is formed by the bottom surface portion 5, the first side surface portion 6 and the second side surface portion 7, the base end 20a side of the strip portion 20 is placed on the inner surface side of the connection portion 16, and, as shown in FIGS. 10, 11 and 13, the tip 20b of the strip portion 20 is inserted into the opening portions 22A, 22B from the inner surface side to the outer surface side of the connection portion 16. Consequently, the strip portion 20 and the opening portions 22A, 22B are engaged. In this state, the connection portion 16 is sandwiched between the strip portion 20 and the first side surface portion 6, and the first side surface portion 6 and the connection portion 16 are fixed to each other.

It is desirable to set the length of the strip portion 20 so that the tip 20b of the strip portion 20 does not protrude from the outer surface of the first side surface portion 6 when the tip 20b of the strip portion 20 is inserted into the opening portions 22A, 22B from the inner surface side to the outer surface of the connection portion 16. Accordingly, in the packing container 1, since there is no member protruding from the outer surface of the first side surface portion 6, the packing container 1 has no portion to be caught and is easily transported, and can be placed without a gap on the wall surface of a container or the like which is in contact with the outer peripheral surface side of the first side surface portion 6.

Next, the first flaps 8 and the second flaps 9 formed on the main body part 2, which cover the four sides of the lid part 4, will be described.

As shown in FIG. 1, the first flap 8 is connected to the first side surface portion 6 through a fold portion 24, and the second flap 9 is connected to the second side surface portion 7 through a fold portion 25. The fold portion 24 is one example of a third fold portion, and the fold portion 25 is one example of a fourth fold portion. One first flap 8 is provided on each of two opposing sides, and one second flap 9 is provided on each of two opposing sides of the sides orthogonal to the first flap 8.

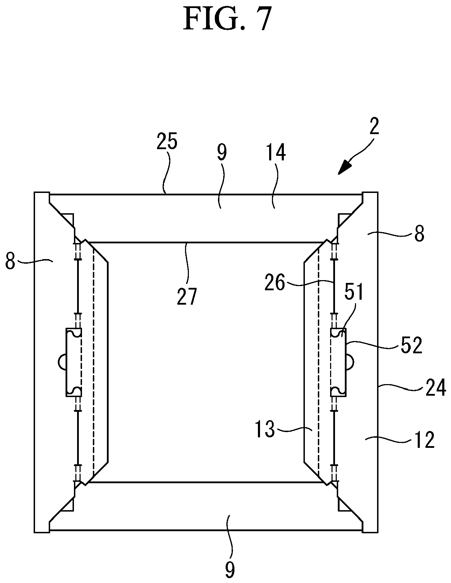

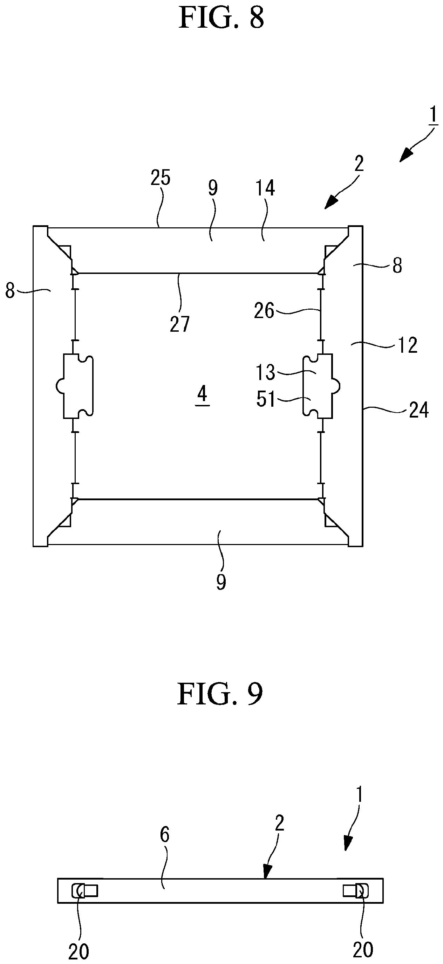

The first flap 8 has a first upper surface portion 12 provided on the fold portion 24 side, and a first lower surface portion 13 connected to the first upper surface portion 12 through a fold portion 26. The fold portion 26 is one example of a fifth fold portion. As shown in FIG. 7, after the first upper surface portion 12 of the first flap 8 is folded inward, in a state in which the first lower surface portion 13 is further folded as shown in FIG. 8, the first upper surface portion 12 is placed on the upper side and the first lower surface portion 13 is placed on the lower side.

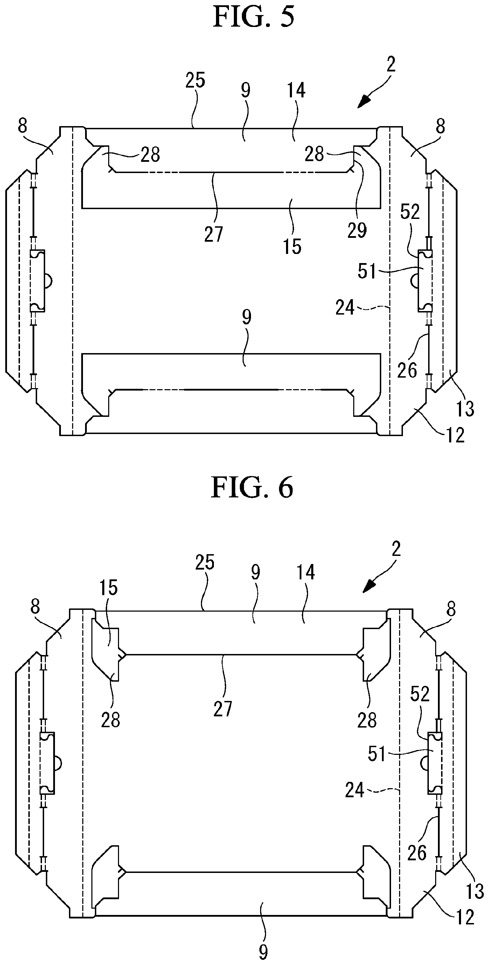

The second flap 9 has a second upper surface portion 14 provided on the fold portion 25 side, and a second lower surface portion 15 connected to the second upper surface portion 14 through a fold portion 27. The fold portion 27 is one example of a sixth fold portion. As shown in FIG. 5, after the second upper surface portion 14 of the second flap 9 is folded inward, in a state in which the second lower surface portion 15 is further folded as shown in FIG. 6, the second upper surface portion 14 is placed on the upper side and the second lower surface portion 15 is placed on the lower side.

On the second flap 9, a protruding portion 28 is each formed at both longitudinal end portions. The second upper surface portion 14 and the second lower surface portion 15 are separated by a cut 29 formed in an L shape at the end portion of the second upper surface portion 14.

As shown in FIG. 5, after the second upper surface portion 14 of the second flap 9 is folded inward, in a state in which the second lower surface portion 15 is further folded as shown in FIG. 6, the protruding portions 28 protrude to the inside of the packing container 1 more than the middle portions of the second upper surface portion 14 and the second lower surface portion 15 of the second flap 9. After the second flap 9 is folded, when the first upper surface portion 12 is folded with respect to the first lower surface portion 13 of the first flap 8 as shown in FIG. 8, the protruding portion 28 of the first lower surface portion 13 is placed to be sandwiched between the first upper surface portion 12 and the first lower surface portion 13 of the first flap 8.

The first lower surface portion 13 of the first flap 8 is pushed upward from the lower side by the panel member 60 stored in the packing container 1, and the first lower surface portion 13 is kept in the state of not being opened, and consequently the closed state of the first flap 8 is maintained and the first flap 8 is hard to open. Moreover, since the first lower surface portion 13 of the first flap 8 is inserted to the protruding portion 28 of the second flap 9 from the inside to the outside of the packing container 1, the closed state of the second flap 9 is maintained and the second flap 9 is hard to open.

When unpacking, the state in which the first flap 8 and the second flap 9 are locked is easily released by lifting up the first flap 8 sandwiching the protruding portion 28 of the second flap 9. The motion of lifting up the first flap 8 does not happen in a stored state in which the panel member 60 is packed and stored, and therefore the packing container 1 is unlikely to be accidentally opened in the stored state.

The protruding portion 28 is formed on the second lower surface portion 15 side. Thus, when the protruding portion 28 is placed to be sandwiched between the first upper surface portion 12 and the first lower surface portion 13 of the first flap 8, the first upper surface portion 12 of the first flap 8 and the second upper surface portion 14 of the second flap 9 are positioned at substantially the same height. Hence, when the panel member 60 is packed, there is no difference in level between the first flap 8 and the second flap 9 on the upper surface of the packing container 1.

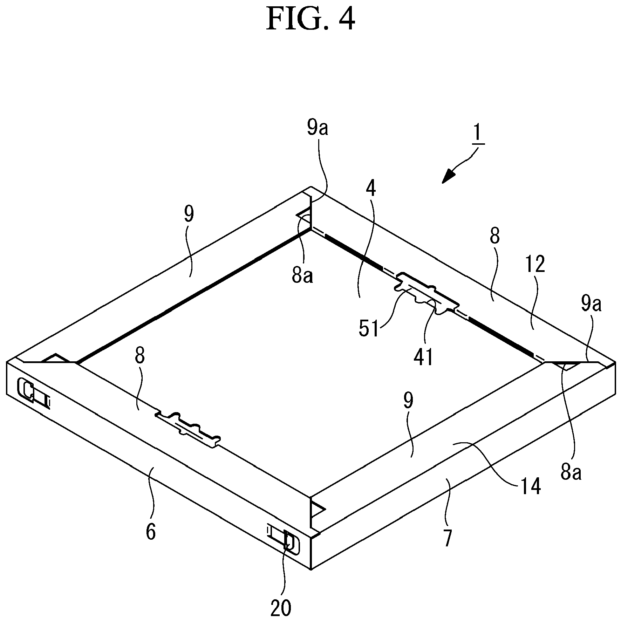

An insertion portion 51 is connected to the first flap 8 at a central portion of the first lower surface portion 13. The first upper surface portion 12 and the insertion portion 51 connected to the first lower surface portion 13 are separated by a cut 52 formed in a square-bracket shape at the central portion of the first flap 8. The insertion portion 51 is formed to protrude inward in the state in which the first upper surface portion 12 is folded inward and the first lower surface portion 13 is further folded. An insertion hole 41 is formed in the lid part 4, and, as shown in FIG. 4, the insertion portion 51 is inserted into the insertion hole 41. Consequently, the middle portion of the first flap 8 is fixed without forming a gap with respect to the lid part 4, and the second flap 9 is also in a locked state by the first flap 8.

When the packing container 1 is assembled, the first flap 8 and the second flap 9 are adjacent to each other. At this time, a side end portion 8a of the first flap 8 is formed in direction inclined (for example, 45°) with respect to the longitudinal direction of the first side surface portion 6 and a side end portion 9a of the second flap 9 is formed in a direction inclined (for example, 45°) with respect to the longitudinal direction of the second side surface portion 7 so that the side end portion 8a of the first flap 8 and the side end portion 9a of the second flap 9 abut each other.

The first flap 8 is foldable with respect to the first side surface portion 6 at the fold portion 24, the second flap 9 is foldable with respect to the second side surface portion 7 at the fold portion 25, and the side end portion 8a of the first flap 8 and the side end portion 9a of the second flap 9 abut each other, and thus a corner of the packing container 1 is formed by the first side surface portion 6, the second side surface portion 7, the first flap 8 and the second flap 9.

As shown in FIG. 3, when assembled, the spacer 3 has a substantially a square-bracket shape in a plan view and is placed along the inner surfaces of the first side surface portion 6 and the second side surface portion 7 of the main body part 2. The spacer 3 is a plate-like member, and has a height substantially equal to an internal measurement of the second side surface portion 7. In a state in which the second side surface portion 7 of the main body part 2 stands on the bottom surface portion 5, the spacers 3 are placed along the inner surfaces of the first side surface portions 6 and the second side surface portions 7. Thus, it is possible to support a load in the height direction of the main body part 2, thereby improving the strength of the packing container 1.

The spacer 3 is formed by assembling one blank sheet different from the blank of the main body part 2. The spacer 3 has a first reinforcing portion 31 and second reinforcing portions 32.

The first reinforcing portion 31 has a substantially rectangular shape, and is placed along the inner surface of the second side surface portion 7. The second reinforcing portions 32 have a substantially rectangular shape, and are connected to both ends of the first reinforcing portion 31 through fold lines 35 parallel to the height direction of the spacer 3. The second reinforcing portion 32 is placed along the inner surface of the first side surface portion 6.

In the spacer 3, an opening portion 37 is formed in a plate surface of the second reinforcing portion 32. The strip portion 20 provided on the inner surface side of the connection portion 16 is placed in the opening portion 37. When the tip 20b of the strip portion 20 is inserted into the opening portions 22A, 22B of the connection portion 16 from the inner surface side to the outer surface side of the connection portion 16, the strip portion 20 is placed on the inner surface of the connection portion 16, and therefore the tip 20b protrudes more than the inner surface of the connection portion 16. By forming the opening portion 37 in the second reinforcing portion 32 of the spacer 3 and placing the strip portion 20 in the opening portion 37, the connection portion 16 and the second reinforcing portion 32 can be closely attached.

As shown in FIG. 3, the lid part 4 has a shape conforming to the planar shape of the panel member 60 to be stored, and, for example, when the panel member 60 has a square shape, the lid part 4 also has a substantially square shape. The insertion hole 41 is formed in the lid part 4, and the insertion portion 51 is inserted into the insertion hole 41.

In order to assemble the packing container 1 from the above-mentioned blank, first, the main body part 2 and the spacers 3 are assembled individually, and the assembled spacers 3 are placed inside the assembled main body part 2. Then, the panel member 60, which is an item to be packed, is placed inside the main body part 2 and the spacers 3. Thereafter, the panel member 60 is stored in the main body part 2, the lid part 4 is placed on the panel member 60, and further the upper surface of the four sides of the lid part 4 is covered with the first flaps 8 and the second flaps 9 provided on the main body part 2. Consequently, as shown in FIGS. 4, 8 and 9, the assembly of the packing container 1 is completed, and the panel member 60 is packed in the packing container 1.

Hereinafter, the assembly of the main body part 2 will be described.

First, the first side surface portion 6 is set upright with respect to the bottom surface portion 5 of the plate-like blank. At this time, the first side surface portion 6 is folded inward on the first fold line 10, and the first side surface portion 6 is set vertical to the bottom surface portion 5.

The second side surface portion 7 is set upright with respect to the bottom surface portion 5 of the plate-like blank. At this time, the second side surface portion 7 is folded inward on the second fold line 11, and the second side surface portion 7 is set vertical to the bottom surface portion 5.

Then, the connection portion 16 is folded inward on the fold line 17 so that an angle formed between the connection portion 16 and the second side surface portion 7 is 90°, thereby making an L shape. As a result, in the state in which the second side surface portion 7 stands on the bottom surface portion 5, the connection portion 16 is placed along the inner surface of the first side surface portion 6.

Further, when a corner of the packing container 1 is formed by the bottom surface portion 5, the first side surface portion 6 and the second side surface portion 7, the connection portion 16 is placed along the inner surface of the first side surface portion 6. Consequently, the second side surface portion 7 and the connection portion 16 have an L shape. At this time, the inside plate 16A of the connection portion 16 is placed on the inner side, and the outside plate 16B which is folded outward on the fold line 19 is placed on the outer side.

Then, the strip portion 20 is pulled through the cut 21 formed on the inner side of the plate surface of the first side surface portion 6 while leaving the base end 20a. Thus, the strip portion 20 is formed so that the base end 20a is connected to the first side surface portion 6 and the tip 20b is in a cantilevered state with respect to the first side surface portion 6.

In order to engage the strip portion 20 with the opening portions 22A, 22B and connect the first side surface portion 6 and the connection portion 16, first, the base end 20a side of the strip portion 20 is fitted into the cutout portions 23A, 23B formed at the end portion of the connection portion 16. Then, the base end 20a side of the strip portion 20 is placed on the inner surface side of the connection portion 16, and the tip 20b of the strip portion 20 is inserted into the opening portions 22A, 22B from the inner surface side to the outer surface side of the connection portion 16. Consequently, the strip portion 20 and the opening portions 22A, 22B are engaged. In this state, the connection portion 16 is sandwiched between the strip portion 20 and the first side surface portion 6, and the first side surface portion 6 and the connection portion 16 are fixed to each other.

Next, the panel member 60 is stored inside the main body part 2, and the lid part 4 is placed on the panel member 60. Then, as shown in FIG. 5, the second upper surface portion 14 of the second flap 9 is folded inward, and the second lower surface portion 15 is further folded as shown in FIG. 6. In this state, the protruding portions 28 protrude to the inside of the packing container 1.

Thereafter, as shown in FIG. 7, the first upper surface portion 12 of the first flap 8 is folded inward. Then, as shown in FIG. 8, the first lower surface portion 13 is further folded to be sandwiched between the first upper surface portion 12 and the first lower surface portion 13 of the first flap 8. Since the first lower surface portion 13 is inserted to the protruding portion 28 of the second flap 9 from the inside to the outside of the packing container 1, the closed state of the second flap 9 is maintained, and the second flap 9 is hard to open.

In the above embodiment, the case where the second flap 9 has the second upper surface portion 14 and the second lower surface portion 15 and is folded through the fold portion 27 is described as an example, but the present invention is not limited to this configuration. In the above example, in the state of being folded twice at the fold portion 25 and the fold portion 27, the protruding portions 28 protrude to the inside of the packing container 1. On the contrary, the second flap 9 may have a shape without the second upper surface portion 14 and the second lower surface portion 15, and the protruding portions 28 may protrude to the inside of the packing container 1 in the state in which the second flap 9 is folded once at the fold portion 25. Even in this case, by folding the first lower surface portion 13 of the first flap 8 and sandwiching the protruding portion 28 by the first flap 8, the first flap 8 and the second flap 9 are in a locked state.

Further, in the above embodiment, the case where the first side surface portion 6 and the second side surface portion 7 are connected by engagement of the strip portion 20 and the opening portions 22A, 22B formed in the connection portion 16 is described, but the present invention is not limited to this example. For instance, the first side surface portion 6 and the connection portion 16 may be fixed using, for example, an adhesive, a staple or a tape, and the first side surface portion 6 and the second side surface portion 7 are connected.

### [Reference Signs List]

- 1: Packing container
- 2: Main body part
- 3: Spacer
- 4: Lid part
- 5: Bottom surface portion
- 6: First side surface portion
- 7: Second side surface portion
- 8: First flap
- 8a: Side end portion
- 9: Second flap
- 9a: Side end portion
- 10: First fold line (first fold portion)
- 11: Second fold line (second fold portion)
- 12: First upper surface portion
- 13: First lower surface portion
- 14: Second upper surface portion
- 15: Second lower surface portion
- 16: Connection portion
- 16A: Inside plate
- 16B: Outside plate
- 17: Fold line
- 18: Cut
- 19: Fold line
- 20: Strip portion
- 20a: Base end
- 20b: Tip
- 21: Cut
- 22A, 22B: Opening portion
- 23A, 23B: Cutout portion
- 24: Fold portion (third fold portion)
- 25: Fold portion (fourth fold portion)
- 26: Fold portion (fifth fold portion)
- 27: Fold portion (sixth fold portion)
- 28: Protruding portion
- 29: Cut
- 31: First reinforcing portion
- 32: Second reinforcing portion
- 35: Fold line
- 37: Opening portion
- 41: Insertion hole
- 51: Insertion portion
- 52: Cut
- 60: Panel member

## Claims

1. A packing container (1) comprising:
a bottom surface portion (5);
a first side surface portion (6) connected to the bottom surface portion (5) through a first fold portion (10);
a second side surface portion (7) connected to the bottom surface portion (5) through a second fold portion (11) and adjacent to the first side surface portion (6);
a first flap (8) connected to the first side surface portion (6) through a third fold portion (24); and
a second flap (9) connected to the second side surface portion (7) through a fourth fold portion (25) and adjacent to the first flap (8), wherein
the first flap (8) has a first upper surface portion (12) provided on the third fold portion (24) side, and a first lower surface portion (13) connected to the first upper surface portion (12) through a fifth fold portion (26), and
the second flap (9) has a protruding portion (28) formed at an end portion of the second flap (9) so that, in a state in which the second flap (9) is folded inward, the protruding portion (28) protrudes more inward than a middle portion of the second flap (9) and is sandwiched between the first upper surface portion(12) and the first lower surface portion (13) of the first flap (8).

2. The packing container (1) according to claim 1, wherein
the second flap (9) has a second upper surface portion (14) provided on the fourth fold portion (25) side, and a second lower surface portion (15) connected to the second upper surface portion (14) through a sixth fold portion (27), and
the protruding portion (28) is formed at an end portion of the second lower surface portion (15) so that, in a state in which the second upper surface portion (14) is folded inward and the second lower surface portion (15) is further folded, the protruding portion (28) protrudes more inward than middle portions of the second upper surface portion (14) and the second lower surface portion (15).

3. The packing container (1) according to claim 1 or 2, further comprising:
a main body part (2) formed of a sheet material, including the bottom surface portion (5), the first side surface portion (6), the second side surface portion (7), the first flap (8) and the second flap (9); and
a lid part (4) formed of a sheet material different from the sheet material forming the main body part (2) and configured to be placed parallel to the bottom surface portion (5), wherein
the main body part (2) has an insertion portion (51) connected to the first lower surface portion (13) of the first flap (8) and formed to protrude inward in a state in which the first upper surface portion (12) is folded inward and the first lower surface portion (13) is further folded, and
the insertion portion (51) is configured to be inserted into an insertion hole (41) formed in the lid part (4).

4. The packing container (1) according to claim 2 or according to claims 2 and 3, wherein a side end portion (8a) of the first upper surface portion (12) is formed in a direction inclined with respect to the first side surface portion (6) and a side end portion (9a) of the second upper surface portion (14) is formed in a direction inclined with respect to the second side surface portion (7) so that the side end portion (8a) of the first upper surface portion (12) of the first flap (8) and the side end portion (9a) of the second upper surface portion (14) of the second flap (9) abut each other.

5. A sheet material for a packing container, for forming the packing container (1) according to any one of claims 1 to 4.
